# EUROPÄISCHE PATENTANMELDUNG

(11) **EP 1 600 431 A2**
(43) Veröffentlichungstag der Anmeldung: **30.11.2005**
(21) Anmeldenummer: 05010901.6
(22) Anmeldetag: 19.05.2005
(51) Int. Cl.: C04B 28/14

(54) **Haftbrücke, Verwendung der Haftbrücke als Putz und Verfahren zum Herstellen der Haftbrücke oder des Putzes**

(30) Priorität: 28.05.2004 DE 102004026229
(71) Anmelder: SCHWENK Putztechnik GmbH & Co. KG, 89077 Ulm (DE)
(72) Erfinder: Balau, Johann, 97753 Karlstadt (DE)
(74) Vertreter: Leinweber & Zimmermann

(57) **Zusammenfassung**

Es wird eine Haftbrücke beschrieben, die
- ein Zement, Schlacke und Sulphat aufweisendes Bindemittel und
- Zuschläge
enthält.

## Beschreibung

Die Erfindung betrifft u.a. eine Haftbrücke. Derzeit bekannte Haftbrücken (Lieferung in Pulverform oder in pastöser Form) basieren auf Kunstharzen und dienen insbesondere der Haftverbesserung von Gipsputzen auf Betonelementen mit einer Restfeuchte von bis zu 4 %. Insbesondere die erwähnte Restfeuchte erschwert die Erhärtung der bekannten Haftbrücken und führt insbesondere bei Belastungen zu einem Brechen oder Reißen der Haftbrücke. Ferner reagiert bei herkömmlichen Haftbrücken das frische und/oder nasse Betonelement mit dem Gips. Darüber hinaus sind die bekannten Kunstharzhaftbrücken nur in sehr eingeschränktem Maße dazu in der Lage, die in dem Betonelement auftretenden Scherkräfte aufzunehmen. Das gleiche gilt für die beim Verputzen von Beton übliche Blasenbildung. Auch diese Blasenbildung kann von den bekannten Kunstharzhaftbrücken nicht unterbunden werden.

Der Erfindung stellt sich daher die Aufgabe, eine verbesserte Haftbrücke anzugeben.

Erfindungsgemäß wird die gestellte Aufgabe gelöst durch eine Haftbrücke, enthaltend
- ein Zement, Schlacke und Sulphat aufweisendes Bindemittel und
- Zuschläge.

Bei dem Zement kann es sich dabei um Zement einer einzigen Sorte oder um ein Zementgemisch handeln. In Frage kommen insbesondere Portlandzement, Eisenportlandzement und Eisenhüttenzement.

Der Zement dient dabei insbesondere der Entwicklung der Frühfestigkeiten. Darüber hinaus ist bei der Verwendung des Zements eine Kristallisationshaftung durch die Bildung von Kombinationskristallen nicht nur an Beton, sondern auch an Ziegelsteinen zu beobachten. Dadurch wird eine gute Haftung an zementhaltigen Produkten sowie an Ziegelsteinen erreicht.

Die in der Haftbrücke verwendete Schlacke verleiht ihr sulphatischen Widerstand. Darüber hinaus wird durch die Schlacke eine aus einer Kombinationskristallbildung resultierende Kristallisationshaftung im Zusammenspiel mit gipshaltigen Produkten beobachtet. Die Schlacke ist also insbesondere dort von Vorteil, wo gipshaltige Produkte an Beton, Ziegelsteinen oder dergleichen befestigt werden sollen.

Schließlich entwickelt die Schlacke spätere Festigkeiten als Ergänzung zum Zement.

Als Sulphat kommt insbesondere Kalziumsulphat in Betracht. Es dient zum einen zur Aktivierung der Schlacke. Darüber hinaus tritt eine Immunisierung des Zements gegenüber Spätschäden durch Sulphate ein.

Nach einer bevorzugten Ausführungsform der Erfindung ist vorgesehen, daß das Bindemittel 6 bis 80 Gew. % der Gesamtmischung ausmacht und/oder die Zuschläge 20 bis 94 Gew. % der Gesamtmischung ausmachen.

Vorteilhaft ist dabei ein Zementanteil von 10 bis 50 Gew. % an dem Bindemittel.

Weiterhin ist von Vorteil ein Schlackenanteil von 10 bis 50 Gew. % an dem Bindemittel.

Der Sulphatanteil liegt erfindungsgemäß bevorzugt bei 0,5 bis 40 Gew. % an dem Bindemittel.

Nach einer besonders bevorzugten Ausführungsform der Erfindung weist das Bindemittel mindestens ein latenthydraulisches Bindemittel auf, und zwar bevorzugt bis zu 40 Gew. %. Dabei kommen insbesondere Trass, Puzzolane und Flugasche in Betracht. Diese Bindemittel bringen zeitversetzte Festigkeiten und binden eventuelle Salze, die in Richtung Putz wandern könnten.

Das Bindemittel weist nach einer weiter bevorzugten Ausführungsform der Erfindung Kalkhydrat und/oder Brandkalk auf, und zwar bevorzugt bis zu 20 Gew. %. Wie die Sulphate dienen auch diese Mischungsbestandteile dem Aktivieren der Schlacke. Darüber hinaus aktivieren sie auch die eventuell vorhandenen latenthydraulischen Bindemittel.

Das Bindemittel kann erfindungsgemäß auch Kunstharz aufweisen, und zwar bevorzugt bis zu 50 %. Dadurch wird zum einen eine Haftverbesserung erreicht. Ferner wird die Elastizität der Haftbrücke erhöht.

Die erfindungsgemäß vorgesehenen Zuschläge dienen zum einen der Verbesserung der Verarbeitbarkeit. Insbesondere im Falle ausgewählter Sieblinien bewirken die Zuschläge Hohlräume, wie etwa Poren und Kapillare, die zu einer Haftverbesserung der angrenzenden Putz- oder Spachtellage führen. Es wird also eine Haftung durch Formschluß erreicht.

Zu den bevorzugten Zuschlägen gehören quarzitische und/oder karbonatische Zuschläge (Mehle und/oder Griese).

Darüber hinaus können die Zuschläge aber auch Leichtzuschläge beinhalten. Beispiele sind Perlite, Blähton, Vermikulite, Blähglas und Styropor. Diese Leichtzuschläge dienen der Verbesserung der Ergiebigkeit sowie der Verarbeitbarkeit. Schließlich kommen als Zuschläge auch Körnungen und Mehle gebrochener und aufbereiteter Baustoffe in Betracht, wie etwa Ziegel, Kalksandsteine, Gasbeton und Bauschutt.

Eine weiter bevorzugte Ausführungsform sieht Zusatzmittel vor, nämlich insbesondere Luftporenbildner, Stellmittel, Wasserretentionsmittel, Verzögerer und/oder Beschleuniger.

Die Zusatzmittel machen erfindungsgemäß bevorzugt bis zu 3 Gew. % der Gesamtmischung aus.

Im folgenden ist ein Beispiel für die Zusammensetzung einer erfindungsgemäß bevorzugten Haftbrücke gegeben:
1. Bindemittel

| | |
|---|---|
| 1.1 | 10,00 Gew. % Portlandzement |
| 1.2 | 20,00 Gew. % gemahlener Hüttensand |
| 1.3 | 5,00 Gew. % Trassmehl |
| 1.4 | 5,00 Gew. % Kalkhydrat |
| 1.5 | 4,00 Gew. % Stuckgips |
| 1.6 | 3,00 Gew. % Kunstharz |

2. Zuschläge

| | |
|---|---|
| 2.1 | 50,00 Gew. % Quarzsand 1 mm |
| 2.2 | 2,62 Gew. % Perlite |

3. Zusatzmittel

| | |
|---|---|
| 3.1 | 0,30 Gew. % Celluloseäther |

| | |
|---|---|
| 3.2 | 0,02 Gew. % Luftporenbildner |
| 3.3 | 0,03 Gew. % Stärkeäther |
| 3.4 | 0,03 Gew. % Weinsäure |

Mit der erfindungsgemäßen Haftbrücke werden insbesondere folgende Vorteile erzielt:
- gute Haftung auf zementhaltigen Produkten, wie etwa Beton,
- keine Beeinträchtigung durch Feuchte (insbesondere Restfeuchte) des Untergrunds,
- gute Haftung auf sulphathaltigen Untergründen,
- gute Haftung von Gips und Kalkgipsprodukten an der Haftbrücke einerseits durch Koppelkristallbildung und andererseits durch zusätzliche Verkrallung des Gipses bzw. Kalkgipses in Poren und Kapillaren der Haftbrücke.

Insgesamt ist festzuhalten, daß die erfindungsgemäße Haftbrücke wie ein Puffer zwischen dem feuchten bzw. frischen Beton und gipshaltigen Produkten wirkt.

Die erfindungsgemäße Zusammensetzung der Haftbrücke führt - wie oben im einzelnen ausgeführt - zu einer besonders guten und haltbaren Haftung an den verschiedensten Untergründen, einschließlich frische und nasse Betonuntergründe sowie Ziegelsteine. Daher ist erfindungsgemäß auch die Verwendung der Haftbrücke als Putz vorgesehen. Mit anderen Worten wird eine Schicht der im Zusammenhang mit der Haftbrücke beschriebenen erfindungsgemäßen Zusammensetzung auf den betreffenden Untergrund aufgebracht, ohne daß auf der dem Untergrund gegenüberliegenden Seite irgend etwas weiteres angebracht würde. Auch bei dieser Art der Verwendung werden nämlich die erfindungsgemäßen Vorteile erzielt, die insbesondere darin bestehen, daß die erfindungsgemäße Zusammensetzung verläßlich und dauerhaft auf dem Untergrund haftet, selbst wenn es sich dabei um frischen oder nassen Beton handelt. Damit steht ein geeignetes Mittel zum Sanieren von Bauwerken zur Verfügung. Bei entsprechender Veredelung kann der genannte Putz als Sanierputz dienen.

Schließlich ist Gegenstand der Erfindung ein Verfahren zum Herstellen der oben im einzelnen beschriebenen Haftbrücke oder des obenerwähnten Putzes. Nach dem erfindungsgemäßen Verfahren ist vorgesehen, daß zunächst der Zement und das Sulphat miteinander vermischt werden und erst später die Schlacke zugegeben wird.

Durch diese erfindungsgemäße Abfolge der Einzelschritte wird eine besonders gute Haftbrücke bzw. ein besonders guter Putz erhalten, insbesondere mit den oben im einzelnen beschriebenen Vorteilen.

Die in der obigen Beschreibung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Haftbrücke, enthaltend
- ein Zement, Schlacke und Sulphat aufweisendes Bindemittel und
- Zuschläge.

2. Haftbrücke nach Anspruch 1, **dadurch gekennzeichnet, daß** das Bindemittel 6 bis 80 Gew. % der Gesamtmischung ausmacht und/oder die Zuschläge 20 bis 94 Gew. % der Gesamtmischung ausmachen.

3. Haftbrücke nach Anspruch 1 oder 2, **gekennzeichnet durch** einen Zementanteil von 10 bis 50 Gew. % an dem Bindemittel.

4. Haftbrücke nach einem der vorangehenden Ansprüche, **gekennzeichnet durch** einen Schlackeanteil von 10 bis 50 Gew. % an dem Bindemittel.

5. Haftbrücke nach einem der vorangehenden Ansprüche, **gekennzeichnet durch** einen Sulphatanteil von 0,5 bis 40 Gew. % an dem Bindemittel.

6. Haftbrücke nach einem der vorangehenden Ansprüche, **dadurch gekennzeichnet, daß** das Bindemittel mindestens ein latenthydraulisches Bindemittel aufweist, und zwar bevorzugt bis zu 40 Gew. %.

7. Haftbrücke nach einem der vorangehenden Ansprüche, **dadurch gekennzeichnet, daß** das Bindemittel Kalkhydrat und/oder Brandkalk aufweist, und zwar bevorzugt bis zu 20 Gew. %.

8. Haftbrücke nach einem der vorangehenden Ansprüche, **dadurch gekennzeichnet, daß** das Bindemittel Kunstharz aufweist, und zwar bevorzugt bis zu 50 %.

9. Haftbrücke nach einem der vorangehenden Ansprüche, **dadurch gekennzeichnet, daß** die Zuschläge quarzitische und/oder karbonatische Zuschläge beinhalten.

10. Haftbrücke nach einem der vorangehenden Ansprüche, **dadurch gekennzeichnet, daß** die Zuschläge Leichtzuschläge beinhalten.

11. Haftbrücke nach einem der vorangehenden Ansprüche, **gekennzeichnet durch** Zusatzmittel, nämlich insbesondere Luftporenbildner, Stellmittel, Wasserretentionsmittel, Verzögerer und/oder Beschleuniger.

12. Haftbrücke nach Anspruch 11, **dadurch gekennzeichnet, daß** die Zusatzmittel bis zu 3 Gew. % der Gesamtmischung ausmachen.

13. Verwendung der Haftbrücke nach einem der vorangehenden Ansprüche als Putz.

14. Verfahren zum Herstellen der Haftbrücke nach einem der Ansprüche 1 bis 12 oder des Putzes nach Anspruch 13,
**dadurch gekennzeichnet, daß**
zunächst der Zement und das Sulphat miteinander vermischt werden und erst später die Schlacke zugegeben wird.
